# EUROPÄISCHE PATENTSCHRIFT

(11) **EP 3 628 552 B1**
(45) Veröffentlichungstag und Bekanntmachung des Hinweises auf die Patenterteilung: **30.08.2023**
(21) Anmeldenummer: 19209999.2
(22) Anmeldetag: 23.06.2016
(51) Int. Cl.: B60S 3/06, A46B 13/00, A46B 7/06

(54) **WASCHVORRICHTUNG FÜR EINE FAHRZEUGWASCHANLAGE UND FAHRZEUGWASCHANLAGE**
WASHING DEVICE FOR A VEHICLE WASHING SYSTEM, AND VEHICLE WASHING SYSTEM
DISPOSITIF DE LAVAGE POUR INSTALLATION DE LAVAGE DE VÉHICULE ET INSTALLATION DE LAVAGE DE VÉHICULE

(30) Priorität: 08.07.2015 DE 102015111023
(43) Veröffentlichungstag der Anmeldung: 01.04.2020
(62) Teilanmeldung aus: 16731183.6
(73) Patentinhaber: Alfred Kärcher SE & Co. KG, 71364 Winnenden (DE)
(72) Erfinder: Haberl, Bernd, 71554 Weissach im Tal (DE)
(74) Vertreter: DTS Patent- und Rechtsanwälte Schnekenbühl und Partner mbB

(56) Entgegenhaltungen:
- EP-A1- 0 808 753
- EP-B1- 0 808 753
- DE-A1- 2 733 091
- DE-C2- 2 733 091

## Beschreibung

Die Erfindung betrifft eine Waschvorrichtung für eine Fahrzeugwaschanlage, welche Waschvorrichtung eine um eine Drehachse drehend antreibbare Welle und mit dieser in Wirkverbindung stehende Waschelemente zum Reinigen eines Fahrzeugs umfasst.

Außerdem betrifft die Erfindung eine Fahrzeugwaschanlage, besonders für Kraftfahrzeuge, mit mindestens einer Waschvorrichtung.

Eine Waschvorrichtung der eingangs genannten Art kommt bei einer Fahrzeugwaschanlage zum Einsatz, bei der es sich um eine Portalwaschanlage oder um eine Waschstraße handeln kann. Die Waschvorrichtung kann als Seitenwaschvorrichtung zum Reinigen seitlicher Fahrzeugbereiche oder als "Dach"waschvorrichtung zum Einsatz kommen, mit der an einer Oberseite liegende Fahrzeugbereiche und insbesondere das Dach gereinigt werden können.

In der Praxis besteht das Problem, dass Fahrzeuge unterschiedliche Konturen aufweisen können und eine Reinigung derselben Güte von Fahrzeugen unterschiedlicher Konturen schwer fällt. Beispielsweise weisen Sportwagen eine flache, zur Seite oftmals stark konvexe Kontur auf, Limousinen eine mittelhohe, trapezförmige Kontur und Großraumlimousinen und Kleinbusse eine eher rechteckförmige Kontur. Zur Anpassung der Waschvorrichtung an die Kontur des Fahrzeugs schlägt die EP 0 012 683 A1 vor, die Welle mit einem Gelenk auszustatten, so dass zwei im Winkel zueinander ausgerichtete Abschnitte der Welle vorhanden sind. Nachteilig ist es jedoch, dass im Bereich des Gelenkes Waschelemente ausgespart sind und das Fahrzeug an dieser Stelle nur unzureichend gereinigt wird. Zudem ist es erforderlich, zur Bereitstellung und Aufrechterhaltung der Abwinklung die Welle beidseitig zu lagern, was einen beträchtlichen Material- und Herstellungsaufwand erfordert.

Eine weitere Waschvorrichtung mit abwinkelbarer Welle ist in der EP 0 808 753 A1 beschrieben. Die Waschvorrichtung weist eine Hohlwelle auf, die auf einer im Inneren angeordneten Seele drehbar gelagert ist. Die Seele kann an einem Gelenk abgewinkelt werden. Unterschiedliche Segmente der Hohlwelle sind über stirnseitige Verzahnungen gekoppelt. Die in der EP 0 808 753 A1 beschriebene Waschvorrichtung weist den Nachteil einer komplexen, herstellungstechnisch aufwendigen Konstruktion auf. Zudem ist eine Anpassung der Waschvorrichtung an die Fahrzeugkontur nur eingeschränkt möglich.

Die DE 10 2006 017 999 A1 beschreibt eine Waschvorrichtung mit Konturanpassung an das Fahrzeug. In dieser Druckschrift wird vorgeschlagen, dass die Waschelemente im drehenden Zustand der Welle über ihre freien Enden eine konkave Kontur ausbilden, die näherungsweise der konvexen Kontur von Fahrzeugen entspricht. Die Herstellung dieser Waschvorrichtung ist mit hohen Kosten verbunden, da für unterschiedliche axiale Abschnitte längs der Drehachse unterschiedliche Waschelemente vorgehalten und montiert werden müssen.

Die DE 27 33 091 A1 beschreibt eine Waschvorrichtung mit schwenkbaren Segmenten, nach dem Oberbegriff des Anspruchs 1.

In der WO 2007/072524 A1 ist ein auf Formschluss basierender Befestigungsmechanismus für Waschelemente an der Welle beschrieben.

Aufgabe der vorliegenden Erfindung ist es, eine Waschvorrichtung der eingangs genannten Art sowie eine Fahrzeugwaschanlage bereitzustellen, wobei mit der Waschvorrichtung eine Anpassung an die Kontur eines Fahrzeugs ermöglicht wird, um eine bessere Reinigung desselben zu erzielen.

Diese Aufgabe wird erfindungsgemäß durch eine Waschvorrichtung mit den Merkmalen von Anspruch 1 gelöst.

Die erfindungsgemäße Waschvorrichtung ist axial in zumindest zwei Waschvorrichtungssegmente unterteilt, wobei "axial" und "radial", soweit nicht anderweitig erläutert, in Bezug auf die von der Welle definierte Drehachse bezogen aufzufassen ist. Zumindest ein Waschvorrichtungssegment weist einen Waschelementhaltekörper auf zum Haltern der Waschelemente. Der Waschelementhaltekörper kann zum Rotieren der Waschelemente um die Waschvorrichtungssegmentachse drehend angetrieben werden. Der Antrieb des Waschelementhaltekörpers erfolgt exzentrisch, wobei die Waschvorrichtungssegmentachse und die von der Welle definierte Drehachse voneinander unterschiedlich sind. Die Getriebeeinrichtung ist vorgesehen, um eine Drehbewegung der Welle in eine Drehbewegung des Waschelementhaltekörpers umzusetzen. Zusätzlich erlaubt die Getriebeeinrichtung, den Waschelementhaltekörper im drehend angetriebenen Zustand relativ zur Welle zu verschwenken. Durch die exzentrische Anordnung der Welle relativ zum Waschelementhaltekörper besteht dadurch insbesondere die Möglichkeit, einen Abstand des Waschelementhaltekörpers relativ zum Fahrzeug zu verändern. Dies erlaubt es beispielsweise, dass der Waschelementhaltekörper eine überlagerte Bewegung durch Eigenrotation um die Waschvorrichtungssegmentachse und Verschwenken relativ zur Welle ausführt und sich dadurch dem Fahrzeug annähert, wenn dieses einen vergleichsweise großen Abstand von der Waschvorrichtung aufweist oder die Kontur des Fahrzeuges zurückweicht. Umgekehrt kann durch einen vergleichsweise geringen Abstand des Fahrzeuges zur Waschvorrichtung oder Hervorragen der Kontur des Fahrzeugs die Reibung der Waschelemente mit dem Fahrzeug erhöht werden. Dies hat zur Folge, dass ein Drehmoment auf den Waschelementhaltekörper ausgeübt und dieser im drehenden Zustand zur Vergrößerung des Abstandes vom Fahrzeug verschwenkt wird. Auf diese Weise ist die Möglichkeit gegeben, dass sich die Waschvorrichtung zumindest im Bereich des Waschvorrichtungssegmentes an die Kontur eines Fahrzeugs anpasst. Die Waschvorrichtung ist dadurch vielseitig einsetzbar.

Der Waschelementhaltekörper ist über die Getriebeeinrichtung relativ zur Welle insbesondere um die Drehachse verschwenkbar ausgebildet.

Von Vorteil ist es, wenn jedes Waschvorrichtungssegment einen Waschelementhaltekörper und eine Getriebeeinrichtung umfasst, wie diese vorstehend beschrieben wurden. Bei jedem Waschvorrichtungssegment ist ein Waschelementhaltekörper und eine Getriebeeinrichtung vorgesehen, um diesen relativ zur Welle um die jeweilige Waschvorrichtungssegmentachse drehend anzutreiben, wobei der Waschelementhaltekörper über die Getriebeeinrichtung relativ zur Welle verschwenkbar ist. Dies erlaubt eine noch vielseitigere Anpassung der Waschvorrichtung an die Kontur des Fahrzeugs.

Besonders vorteilhaft ist es, wenn die Waschelementhaltekörper der Waschvorrichtungssegmente unabhängig voneinander antreibbar und relativ zur Welle verschwenkbar sind.

Bevorzugt sind die Waschvorrichtungssegmente identisch ausgestaltet, um der Waschvorrichtung einen konstruktiv einfachen Aufbau zu verleihen und deren Herstellungskosten gering zu halten.

Bei einer konkreten Umsetzung der Waschvorrichtung in der Praxis erweist es sich als günstig, wenn die Waschvorrichtung mindestens drei Waschvorrichtungssegmente aufweist, vorzugsweise vier oder mehr Waschvorrichtungssegmente.

Von Vorteil ist es, dass die Getriebeeinrichtung ein drehfest mit der Welle verbundenes Antriebselement aufweist und einen Drehkörper, an dem der Waschelementhaltekörper drehfest gehalten ist oder der den Waschelementhaltekörper ausbildet, wobei der Drehkörper mit dem Antriebselement in Eingriff steht. Durch Antreiben der Welle wird das Antriebselement um die Drehachse in Drehung versetzt. Über den bestehenden Eingriff mit dem Drehkörper wird dieser zum Rotieren der Waschelemente um die Waschvorrichtungssegmentachse gedreht.

Der Drehkörper ist ein Hohlrad mit Innenverzahnung und das Antriebselement ein mit dem Hohlrad kämmendes Zahnrad. Bei einer andersartigen erfindungsgemäßen Ausführungsform ist der Drehkörper ein Hohlrad und das Antriebselement eine innenseitig am Hohlrad abrollende Rolle.

Vorzugsweise umfasst die Getriebeeinrichtung zumindest einen den Drehkörper und das Antriebselement quer zur Waschvorrichtungssegmentachse zumindest teilweise überdeckenden Abdeckkörper. Der Abdeckkörper überdeckt den Drehkörper und das Antriebselement in einer Ebene quer und senkrecht zur Waschvorrichtungssegmentachse zumindest teilweise. Die Getriebeeinrichtung kann dadurch zumindest teilweise vor Eintritt von Schmutz und Reinigungsflüssigkeit geschützt werden.

Es versteht sich, dass der mindestens eine Abdeckkörper eine Ausnehmung oder Durchgangsöffnung aufweisen kann, durch die die Welle hindurchgreift.

Günstig ist es, wenn die Getriebeeinrichtung zwei Abdeckkörper umfasst, die axial auf einander abgewandten Seiten des Drehkörpers und des Antriebselementes angeordnet sind. Die Abdeckkörper können axial voneinander beabstandet sein, wobei der Drehkörper und das Antriebselement zwischen ihnen positioniert sind. Dadurch ist die Möglichkeit gegeben, den Drehkörper und das Antriebselement beidseitig zumindest teilweise zu überdecken.

Die zwei Abdeckkörper sind günstigerweise identisch ausgestaltet.

Von Vorteil ist es, wenn der mindestens eine Abdeckkörper plattenförmig oder im Wesentlichen plattenförmig ist.

Als vorteilhaft erweist es sich, wenn der mindestens eine Abdeckkörper drehbeweglich zur Welle ausgebildet ist. Die von der Welle bewegte Masse kann dadurch gering gehalten werden, um eine Belastung der Welle möglichst gering zu halten.

Die Getriebeeinrichtung weist vorzugsweise ein Lager auf, über das der mindestens eine Abdeckkörper drehbar an der Welle gelagert ist. Beispielsweise ist ein ein Gleitlager bildendes Lagerelement vorgesehen.

Günstigerweise ist der mindestens eine Abdeckkörper reibschlüssig mit dem Drehkörper gekoppelt zur Rotation um die Waschvorrichtungssegmentachse.

Insbesondere in Kombination mit der zuletzt erwähnten vorteilhaften Ausführungsform ist es günstig, wenn der mindestens eine Abdeckkörper drehbeweglich relativ zum Drehkörper ausgebildet ist, wobei die Getriebeeinrichtung vorzugsweise ein Lager aufweist, über das der mindestens eine Abdeckkörper drehbar am Drehkörper gelagert ist. Eine derartige Ausführungsform erweist sich beispielsweise als vorteilhaft, wenn, darauf wird nachfolgend noch eingegangen, der mindestens eine Abdeckkörper ein Anschlagelement umfasst oder ausbildet, um eine Verschwenkung des Drehkörpers relativ zur Welle zu begrenzen. Durch die drehbewegliche Kopplung und insbesondere drehbare Lagerung kann zum einen sichergestellt werden, dass der mindestens eine Abdeckkörper nicht mit derselben Rotationsgeschwindigkeit wie der Drehkörper um die Waschvorrichtungssegmentachse rotiert. Die in Rotation versetzte Masse kann dadurch gering gehalten werden. Durch die reibschlüssige Kopplung besteht zum anderen die Möglichkeit, dass der mindestens eine Abdecckörper dem Drehkörper mit vergleichsweise geringer Rotationsgeschwindigkeit folgt, wobei über das mindestens eine Anschlagelement sichergestellt werden kann, dass der Drehkörper relativ zur Welle nur innerhalb vorgegebener Grenzen verschwenkt werden kann.

Das Lager ist beispielsweise als Lagerring ausgestaltet oder umfasst einen solchen, der zwischen einander zugewandten Stirnseiten des Drehkörpers und des mindestens einen Abdeckkörpers angeordnet ist.

Der Waschelementhaltekörper umgibt insbesondere die Getriebeeinrichtung in Umfangsrichtung der Drehachse. Beispielsweise ist der Waschelementhaltekörper von zylindrischer Kontur und nach Gestalt eines Kerns einer Kabel- oder Schlauchtrommel gebildet. Der Besatz an Waschelementen ist radial außenseitig bezüglich der Waschvorrichtungssegmentachse am Waschelementhaltekörper festgelegt. Radial innenseitig kann der Drehkörper drehfest mit dem Waschelementhaltekörper verbunden sein, zum Beispiel das vorstehend erwähnte Hohlrad.

Die Getriebeeinrichtung umfasst mindestens ein als Zahnrad oder Rolle ausgestaltetes Eingriffselement, das am Hohlrad abrollt, und mindestens einen Kopplungskörper, an dem mindestens ein Eingriffselement drehbar gelagert ist und der an der Welle drehbeweglich gelagert ist. Über das mindestens eine Eingriffselement kann das Hohlrad zusätzlich zur Abstützung am Antriebselement abgestützt werden, um die Rotation des Hohlrades um die Waschvorrichtungssegmentachse zuverlässig zu gestalten. Über den mindestens einen Kopplungskörper kann eine Halterung des mindestens einen Eingriffselementes sichergestellt werden. Es können Lager zur drehbeweglichen Lagerung des Kopplungskörpers an der Welle bzw. des Eingriffselementes am Kopplungskörper vorgesehen sein.

Günstigerweise sind zwei Eingriffselemente vorgesehen, die jeweils an mindestens einem Kopplungskörper drehbar gelagert sind. Dadurch lässt sich zum Beispiel eine Dreipunktlagerung oder Abstützung des Hohlrades am Antriebselement und den beiden Eingriffselementen umsetzen.

Als vorteilhaft erweist es sich, dass zwei Kopplungskörper vorgesehen sind, die axial auf einander abgewandten Seiten des Drehkörpers und des mindestens einen Eingriffselementes angeordnet sind. Zwischen den Kopplungskörpern sind das Hohlrad und das Antriebselement sowie die Eingriffselemente angeordnet.

Als günstig erweist es sich, wenn der mindestens eine Abdeckkörper der Getriebeeinrichtung den mindestens einen Kopplungskörper umfasst oder ausbildet. Dies ermöglicht eine konstruktiv einfache Ausgestaltung und zugleich einen kompakten Aufbau der Getriebeeinrichtung. Der mindestens eine Abdecckörper erlaubt es, das Hohlrad und das Antriebselement und das mindestens eine Eingriffselement zu überdecken, wobei das Eingriffselement zugleich am Abdeckkörper gelagert sein kann.

Das Waschvorrichtungssegment weist bevorzugt eine Anschlageinrichtung auf zum Begrenzen eines Schwenkwinkels des Waschelementhaltekörpers relativ zur Welle in zumindest einer Schwenkrichtung. Über die Anschlageinrichtung kann auf diese Weise vorgegeben werden, welchen Abstandsbereich der Waschelementhaltekörper relativ zum Fahrzeug einnehmen kann, wobei der Abstandsbereich in zumindest einer Richtung begrenzt ist. Dadurch kann vorgegeben werden, in welchem Ausmaß das Waschvorrichtungssegment der Kontur des Fahrzeugs folgen kann.

Von Vorteil ist es, wenn die Anschlageinrichtung mindestens ein Anschlagelement umfasst, das relativ zum Drehkörper drehbeweglich ausgestaltet ist und durch Reibschluss mit dem Drehkörper gekoppelt ist, sowie mindestens ein mit dem mindestens einen Anschlagelement zusammenwirkendes Blockierelement, das ortsfest relativ zur Welle angeordnet ist. Das mindestens eine Anschlagelement ist relativ zum Drehkörper drehbeweglich, so dass beim Antreiben des Drehkörpers die Waschelemente in Rotation versetzt werden können. Außerdem ist das mindestens eine Anschlagelement durch Reibschluss mit dem Drehkörper gekoppelt, wodurch das Anschlagelement relativ zur Welle ebenfalls verschwenkt werden kann. Auf diese Weise ist die Möglichkeit gegeben, dass das mindestens eine Anschlagelement eine Verschwenkung des Drehkörpers relativ zur Welle begrenzt und gleichzeitig die Rotation des Drehkörpers um die Waschvorrichtungssegmentachse nicht beeinträchtigt. Das mindestens eine Blockierelement ist ortsfest und insbesondere feststellbar beweglich relativ zur Welle ausgestaltet. Das mindestens eine Blockierelement dient als Gegenanschlag, der zum Beispiel an einer Halteeinrichtung eines Waschportals oder der Waschstraße gehalten sein kann.

Günstigerweise umfasst die Anschlageinrichtung zwei Anschlagelemente, wobei mit einem jeweiligen Anschlagelement ein Verschwenken des Waschelementhaltekörpers in eine jeweilige Schwenkrichtung begrenzbar ist.

Bei einer vorteilhaften Umsetzung der Waschvorrichtung erweist es sich als günstig, wenn der Waschelementhaltekörper um 180° oder im Wesentlichen 180° relativ zur Welle verschwenkt werden kann, wobei die Schwenkbewegung in die einander entgegengesetzten Schwenkrichtungen mittels jeweils eines Anschlagelementes begrenzt ist.

Vorzugsweise wirkt dasselbe Blockierelement, abhängig von der Schwenkrichtung, mit einem jeweiligen der beiden Anschlagelemente zusammen zum Begrenzen des Schwenkwinkels. Es ist insbesondere nur ein Blockierelement vorgesehen, welches je nach Schwenkrichtung mit einem der beiden Anschlagelemente zusammenwirkt.

Als günstig erweist es sich, wenn die Anschlageinrichtung einen Anschlagkörper aufweist, der beide Anschlagelemente umfasst. Dadurch kann die konstruktive Ausgestaltung der Waschvorrichtung vereinfacht werden.

Vorteilhafterweise sind zwei Anschlagkörper vorgesehen, die axial auf einander abgewandten Seiten des Drehkörpers und des Antriebselementes angeordnet sind.

Der Anschlagkörper kann vorteilhafterweise ein Führungselement umfassen oder bilden, durch das das mindestens eine Blockierelement beim Verschwenken des Waschelementhaltekörper geführt ist. Das Führungselement ist beispielsweise eine bogenförmige Ausnehmung oder Durchgangsöffnung und insbesondere Durchbrechung des Anschlagkörpers, in die das mindestens eine Blockierelement eingreift oder die das mindestens eine Blockierelement durchgreift.

Es wurde bereits erwähnt, dass eine Mehrzahl von Waschvorrichtungssegmenten vorgesehen sein kann mit einer Getriebeeinrichtung und einem relativ zur Welle verschwenkbaren Waschelementhaltekörper. Ein jeweiliges Waschvorrichtungssegment kann eine Anschlageinrichtung umfassen. Günstig ist es, wenn ein gemeinsames Blockierelement vorgesehen ist, das mit dem jeweiligen mindestens einen Anschlagelement von zwei oder mehr Waschvorrichtungssegmenten zusammenwirkt.

Wie bereits erwähnt, kann das mindestens eine Blockierelement feststellbar beweglich relativ zur Welle sein. Insbesondere kann das mindestens eine Blockierelement mittels einer Verstelleinrichtung relativ zum mindestens einen Anschlagelement verstellbar sein. Dies erlaubt es, den Schwenkwinkel, um den der Waschelementhaltekörper relativ zur Welle verschwenkbar ist, einzustellen.

Das mindestens eine Blockierelement ist vorzugsweise längserstreckt und parallel zur Welle ausgerichtet. Beispielsweise ist das mindestens eine Blockierelement als Rohr, Stange, Profil oder dergleichen ausgestaltet.

Das mindestens eine Anschlagelement, insbesondere der Anschlagkörper, ist vorzugsweise über ein Lager drehbar am Drehkörper gelagert.

Das Lager ist oder umfasst zum Beispiel einen Lagerring, der zwischen einander zugewandten Stirnseiten des Drehkörpers und des mindestens einen Anschlagelementes, bzw. des Anschlagkörpers, angeordnet ist.

Besonders vorteilhaft ist es, wenn der mindestens eine Abdeckkörper der Getriebeeinrichtung den mindestens einen Anschlagkörper umfasst oder ausbildet. Dies erlaubt es, die konstruktive Ausgestaltung der Waschvorrichtung zu vereinfachen.

Bei einer andersartigen vorteilhaften Ausführungsform der Waschvorrichtung ist es günstig, wenn der Waschelementhaltekörper entgegen der Wirkung mindestens eines elastischen Elementes relativ zur Welle verschwenkbar ist. Beispielsweise kann der Waschelementhaltekörper bei sich nähernder Kontur des Fahrzeugs relativ zur Welle verschwenken. Bei zurückweichender Kontur des Fahrzeugs kann eine Verschwenkung in der Gegenrichtung unter der Wirkung des mindestens einen elastischen Elementes sichergestellt werden.

Das mindestens eine elastische Element kann zum Beispiel ein Federelement sein, das das mindestens eine Anschlagelement, insbesondere den Anschlagkörper, relativ zum mindestens einen Blockierelement vorspannt. Das Federelement ist beispielsweise eine Zugfeder, die am Anschlagkörper und am mindestens einen Blockierelement angreift.

Bei einer vorteilhaften Ausführungsform ist die Welle starr und geradlinig erstreckt ausgebildet.

Die Welle kann als Hohlwelle ausgestaltet sein oder aus einem Vollmaterial gebildet sein.

Die Waschelemente können Waschborsten oder Waschlappen sein. Unter Waschlappen werden vorliegend Bahnen oder streifenförmige Waschelemente verstanden.

Die Waschvorrichtung kann eine Seitenwaschvorrichtung sein, insbesondere eine Seitenbürste oder eine Dachwaschvorrichtung, insbesondere eine Dachbürste.

Wie erwähnt betrifft die Erfindung auch eine Fahrzeugwaschanlage. Eine erfindungsgemäße Fahrzeugwaschanlage umfasst mindestens eine Waschvorrichtung der vorstehend genannten Art. Die Vorteile, die bereits im Zusammenhang mit der Erläuterung der erfindungsgemäßen Waschvorrichtung erwähnt wurden, können bei der Fahrzeugwaschanlage ebenfalls erzielt werden. Diesbezüglich kann auf voranstehende Erläuterungen verwiesen werden.

Vorteilhafte Ausführungsformen der Fahrzeugwaschanlage ergeben sich durch vorteilhafte Ausführungsformen der erfindungsgemäßen Waschvorrichtung.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Ansicht einer erfindungsgemäßen Fahrzeugwaschanlage, ausgestaltet als Portalwaschanlage, umfassend eine erfindungsgemäße Waschvorrichtung mit mehreren Waschvorrichtungssegmenten beim Reinigen eines Kleinfahrzeugs;
- Figur 2:: die Fahrzeugwaschanlage aus Figur 1 beim Reinigen eines Kleinbusses;
- Figur 3:: eine vergrößerte perspektivische (Teil-)Ansicht, teilweise als Explosionsdarstellung, eines Waschvorrichtungssegmentes der Waschvorrichtung aus Figur 1;
- Figur 4:: eine Schnittansicht (Teildarstellung) des Waschvorrichtungssegmentes;
- Figur 5:: eine Draufsicht auf das Waschvorrichtungssegment in axialer Richtung, wobei dieses nur teilweise dargestellt ist und Waschelemente des Waschvorrichtungssegmentes ein Fahrzeug (schematisch angedeutet) zum Reinigen kontaktieren;
- Figur 6:: eine Darstellung entsprechend Figur 5, wobei ein Abstand des Fahrzeuges von einer Welle der Waschvorrichtung verringert ist und das Waschvorrichtungssegment relativ zur Welle verschwenkt ist;
- Figur 7:: eine Darstellung entsprechend Figur 5, wobei ein Abstand des Fahrzeuges von einer Welle der Waschvorrichtung weiter verringert ist und das Waschvorrichtungssegment relativ zur Welle weiter verschwenkt ist;
- Figur 8:: eine Darstellung entsprechend Figur 5, wobei ein Abstand des Fahrzeuges von einer Welle der Waschvorrichtung noch weiter verringert ist und das Waschvorrichtungssegment relativ zur Welle noch weiter verschwenkt ist; und
- Figur 9:: eine Darstellung entsprechend Figur 3 bei einer weiteren bevorzugten Ausführungsform einer erfindungsgemäßen Waschvorrichtung.

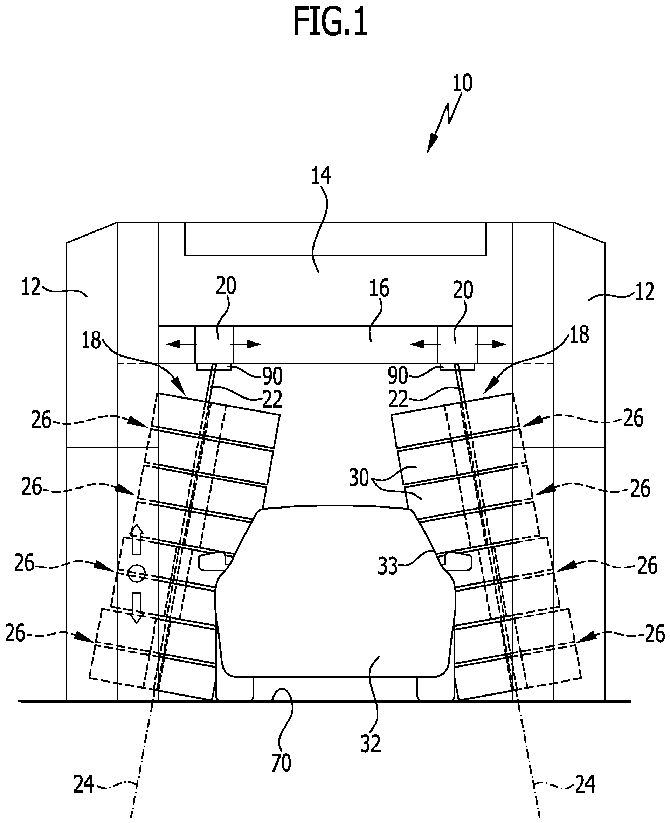

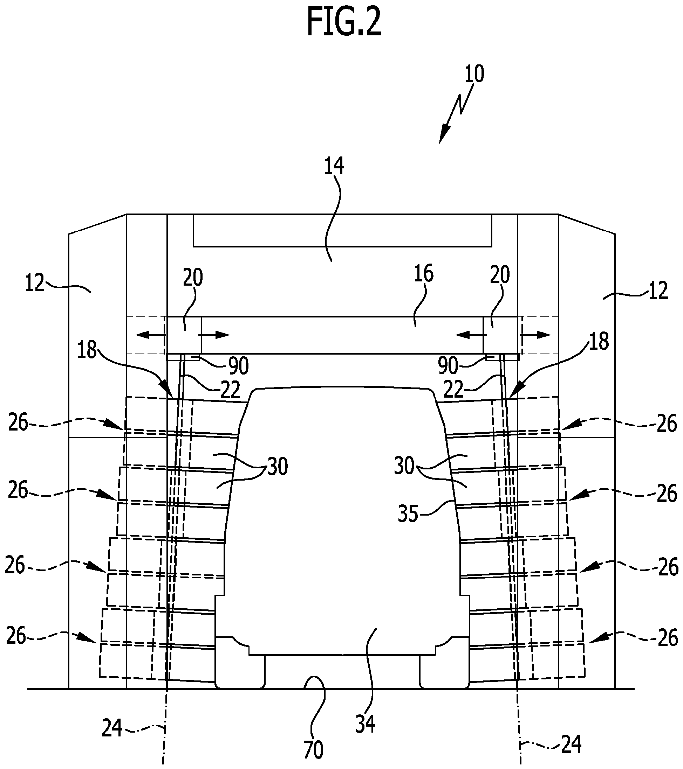

Die Figuren 1 und 2 zeigen in einer schematischen Darstellung eine mit dem Bezugszeichen 10 belegte vorteilhafte Ausführungsform einer erfindungsgemäßen Fahrzeugwaschanlage. Die Fahrzeugwaschanlage 10 ist als Portalwaschanlage ausgestaltet und umfasst seitliche Träger 12 und einen diese verbindenden Querträger 14. Über eine Halteeinrichtung 16 sind vorteilhafte Ausführungsformen einer erfindungsgemäßen Waschvorrichtung 18 beweglich am Waschportal gehalten.

Die Waschvorrichtung 18 ist mittels einer an der Halteeinrichtung 16 festgelegten Antriebseinrichtung 20 drehend antreibbar. Zu diesem Zweck weist die Waschvorrichtung 18 eine Welle 22 auf. Die Welle 22 definiert eine Drehachse 24.

Die Waschvorrichtung 18 umfasst eine Mehrzahl von axial nebeneinander angeordneten Waschvorrichtungssegmenten 26. Auf den Aufbau und die Funktionsweise der jeweiligen Waschvorrichtungssegmente 26 wird nachfolgend eingegangen. Vorliegend sind vier Waschvorrichtungssegmente 26 vorgesehen, die insbesondere identisch ausgestaltet sind.

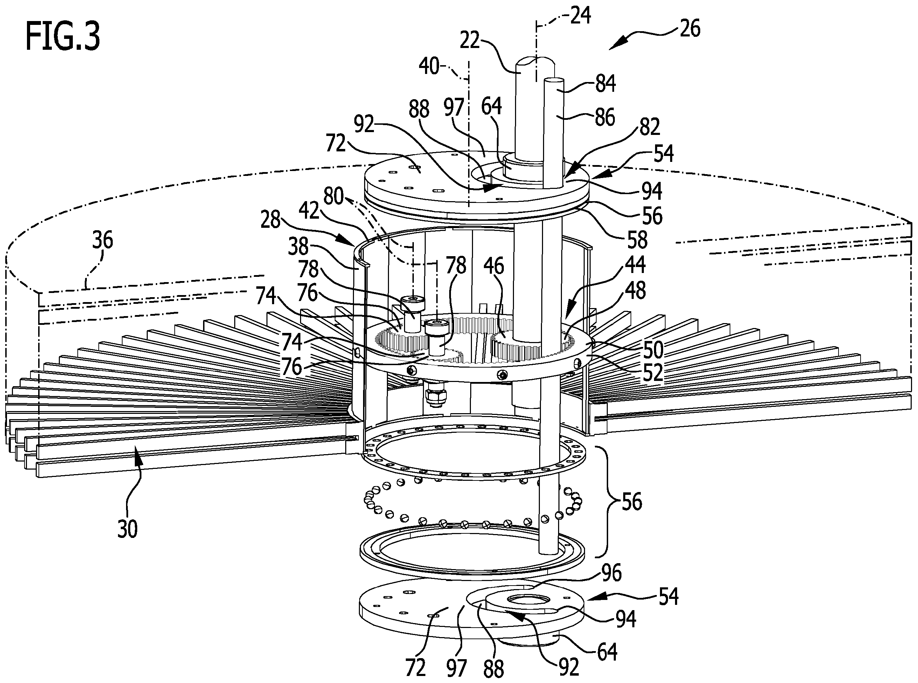

Jedes Waschvorrichtungssegment 26 umfasst einen Waschelementhaltekörper 28 mit daran festgelegten Waschelementen 30 (Figur 3), wobei der jeweilige Waschelementhaltekörper 28 relativ zur Welle 22 um die Drehachse 24 wie nachstehend erläutert verschwenkbar ist. Dies erlaubt es, die Waschelementhaltekörper 28 der mehreren Waschvorrichtungssegmente 26 unabhängig voneinander an der jeweiligen axialen Position an der Welle 22 zu verschwenken. Die Waschelementhaltekörper 28 und die daran gehaltenen Waschelemente 30 können auf diese Weise in unterschiedlichen Abstand zu zu reinigenden Fahrzeugen gebracht werden.

Figur 1 erläutert dies am Beispiel eines Kleinfahrzeuges 32, Figur 2 anhand eines Kleinbusses 34. Die Waschvorrichtung 80 kann sich dadurch an die jeweilige Kontur 33 des Kleinfahrzeuges bzw. 35 des Kleinbusses anpassen. Dadurch kann unter Einsatz der erfindungsgemäßen Waschvorrichtung 18 eine bessere Reinigung von Fahrzeugen auch unterschiedlicher Kontur erzielt werden.

Die Zeichnung zeigt die Waschvorrichtung 18 als Seitenwaschvorrichtung zum Reinigen seitlicher Bereiche der Fahrzeuge. Im Rahmen der Erfindung ist es selbstverständlich auch möglich, dass eine erfindungsgemäße Waschvorrichtung als Dachwaschvorrichtung zum Reinigen einer Oberseite der Fahrzeuge ausgestaltet ist.

Bei den Waschelementen 30 kann es sich um Waschborsten oder um Waschlappen handeln, bahn- oder streifenförmige längserstreckte Waschelemente.

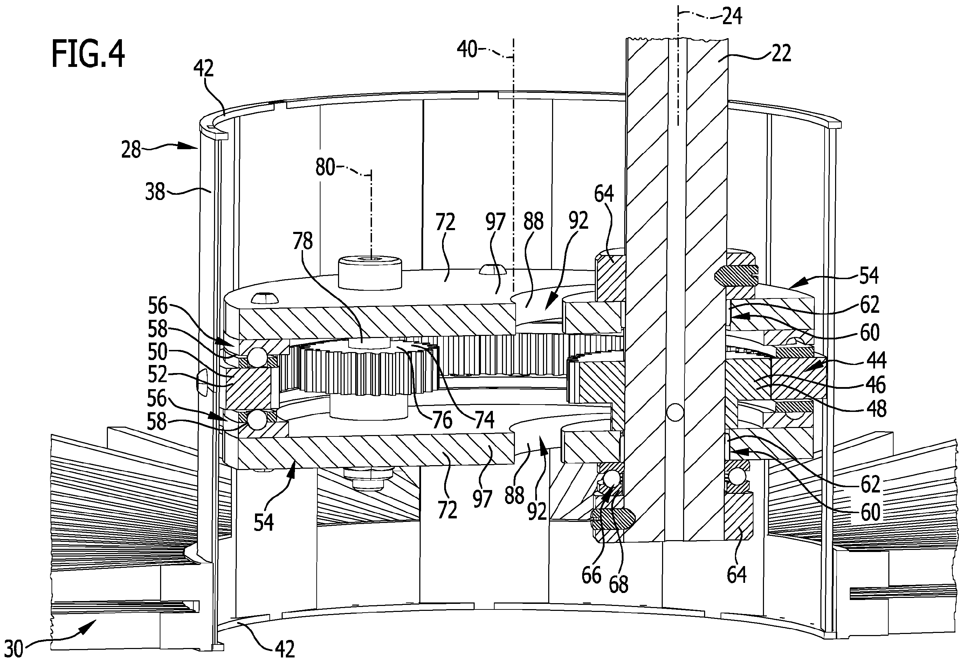

Die Figuren 3 und 4 zeigen den Aufbau der jeweiligen Waschvorrichtungssegmente am Beispiel eines jeweils nur teilweise dargestellten Waschvorrichtungssegmentes 26. Für eine übersichtlichere Darstellung ist der Besatz von Waschelementen 30 nur teilweise gezeigt. Die Darstellung der Waschelemente 30 beschränkt sich auf eine Ansammlung von Waschelementen 30, die eine Ebene relativ zur Drehachse 24 definiert. Gestrichelte Konturlinien 36 symbolisieren weitere, am Waschelementhaltekörper 28 gehaltene Reihen von Waschelementen 30, die axial nebeneinander angeordnet sind.

Die Figuren 3 und 4 stellen außerdem den Waschelementhaltekörper 28 und die Waschelemente 30 nur über einen halben Umfang des Waschvorrichtungssegmentes 26 dar, um die Sicht auf den inneren Aufbau des Waschvorrichtungssegmentes 26 freizugeben. Die Figuren 1, 2 sowie 5 bis 8 zeigen, dass sich der Waschelementhaltekörper 28 und die Waschelemente 30 über den gesamten Umfang des Waschvorrichtungssegmentes 26 erstrecken.

Der Waschelementhaltekörper 28 weist eine zylindrische Gestalt auf und umfasst einen Mantel 38. Der Waschelementhaltekörper 28 definiert eine Waschvorrichtungssegmentachse 40.

In Umfangsrichtung der Waschvorrichtungssegmentachse 40 kann der Mantel 38 teilweise unterbrochen sein, wie dies bei der Waschvorrichtung 18 dargestellt ist. Dementsprechend kann der Mantel 38 aus einer Mehrzahl von in Umfangsrichtung beabstandeten Mantelsegmenten gebildet sein, die axial (bezogen auf die Waschvorrichtungssegmentachse 40) mittels zweier Bünde 42 miteinander verbunden sind. Radial außenseitig am Mantel 38 sind die Waschelemente 30 festgelegt. Hierzu können in Umfangsrichtung der Waschvorrichtungssegmentachse 40 durchgehende Verbindungselemente vorgesehen sein.

Radial innenseitig des Mantels 38 umfasst das Waschvorrichtungssegment 26 eine Getriebeeinrichtung 44. Die Getriebeeinrichtung 44 umfasst ein Antriebselement 46, das drehfest an der Welle 22 gehalten ist. Das Antriebselement 46 ist vorliegend ein Zahnrad 48.

Die Getriebeeinrichtung 44 umfasst ferner einen Drehkörper 50, vorliegend ausgestaltet als innenverzahntes Hohlrad 52. Der Drehkörper 50 ist koaxial zum Waschelementhaltekörper 28 ausgerichtet und mit diesem drehfest verbunden, zum Beispiel durch Verschraubung.

Die Waschvorrichtungssegmentachse 40 ist parallel zur Drehachse 24 ausgerichtet, so dass beide Achsen vorliegend insbesondere voneinander unterschiedlich sind.

Beim Rotieren der Welle 22 um die Drehachse 24 kämmt das Zahnrad 48 mit dem Hohlrad 52. Das Hohlrad 52 und damit der Waschelementhaltekörper 28 sind dadurch exzentrisch über die Welle 22 angetrieben. Das Hohlrad 52, und damit der Waschelementhaltekörper 28, können dadurch eine Rotation zum Rotieren der Waschelemente 30 um die Waschvorrichtungssegmentachse 40 ausführen. Unter Rotation der Waschelemente 30 kann das Fahrzeug gereinigt werden (nachfolgend am Beispiel des Kleinfahrzeugs 32 und dessen Kontur 33 erläutert).

Selbst im drehend angetriebenen Zustand, unter der Rotation der Welle 22 um die Drehachse 24, kann das Hohlrad 52, und damit auch der Waschelementhaltekörper 28, ferner eine Schwenkbewegung relativ zur Welle 22 ausführen. Dabei kann der Waschelementhaltekörper 28 um die Drehachse 24 relativ zur Welle 22 verschwenken.

Unabhängig von der Drehrichtung der Welle 22 ist eine Verschwenkung des Waschelementhaltekörpers 28 in beide Schwenkrichtungen möglich, wobei der Schwenkwinkel vorliegend durch eine unten erläuterte Anschlageinrichtung begrenzt ist. Der Waschelementhaltekörper 28 kann dadurch eine überlagerte Bewegung in Bezug auf die Welle 22 ausführen, nämlich eine Rotation um die Waschvorrichtungssegmentachse 40 und eine Schwenkbewegung um die Drehachse 24.

Bereits durch die voranstehende Erläuterung ist ersichtlich, dass bei als ortsfest angenommener Welle 22 der Waschelementhaltekörper 28 abhängig von dem jeweils eingenommenen Schwenkwinkel relativ zur Welle 22 einen unterschiedlichen Abstand vom Fahrzeug 32 aufweisen kann. Dadurch weisen auch die Waschelemente 30 einen unterschiedlichen Abstand vom Fahrzeug auf. Dies erlaubt es, dass sich die Kontur der Waschvorrichtung 18 an einem jeweiligen Waschvorrichtungssegment 26 an die Kontur 33 des Fahrzeugs 32 anpasst.

Unter dem Verschwenken des Waschelementhaltekörpers 28 kann vorliegend auch ein Verschwenken des Waschvorrichtungssegmentes 26 verstanden werden.

Die Getriebeeinrichtung 44 umfasst zwei Abdeckkörper 54. Die Abdeckkörper 54 sind vorliegend identisch ausgestaltet und erlauben es, das Hohlrad 52 und das Antriebselement 46 von einander abgewandten Seiten axial zu überdecken, d. h. die Abdeckkörper 54 sind axial zu unterschiedlichen Seiten des Hohlrades 52 und des Zahnrades 48 angeordnet. Die Abdeckkörper 54 sind quer zur Ausrichtung der Drehachse 24 und der Waschvorrichtungssegmentachse 40 ausgerichtet.

Die Abdeckkörper 54 sind vorliegend im Wesentlichen plattenförmig ausgestaltet. Ferner weisen die Abdeckkörper 54 eine im Wesentlichen scheibenförmige Ausgestaltung auf. Dabei ist der Durchmesser der Abdeckkörper 54 im Wesentlichen gleich dem Durchmesser des Hohlrades 52, um den vom Hohlrad 52 eingeschlossenen Raum im Wesentlichen vollständig zu überdecken.

Zwischen einander zugewandten Stirnseiten des Hohlrades 52 einerseits und den Abdeckkörpern 54 andererseits ist jeweils ein Lager 56 angeordnet. Das Lager 56 ist ausgestaltet als Lagerring 58, der insbesondere ein Kugellager aufweist. Über den Lagerring 58 sind die Abdeckkörper 54 relativ zum Hohlrad 52 drehbeweglich ausgestaltet. Die Lagerreibung ermöglicht allerdings einen für die Funktionsweise des Waschvorrichtungssegmentes 26 vorteilhaften Reibschluss zwischen den Abdeckkörpern 54 einerseits und dem Hohlrad 52 andererseits.

Die Abdeckkörper 54 sind an der Welle 22 drehbeweglich gelagert. Ein jeweiliges Lager 60 in Gestalt eines Gleitlagers 62 ist zwischen jedem Abdeckkörper 54 und der Welle 22 angeordnet (Figur 4).

An denen jeweils dem Hohlrad 52 abgewandten Seiten der Abdeckkörper 54 sind Halteelemente 64 angeordnet. Die Halteelemente 64 sind drehfest mit der Welle 22 verbunden, um eine axiale Bewegung der Abdeckkörper 54 längs der Drehachse 24 zu verhindern.

Zwischen zumindest einem Halteelement 64 und dem diesem zugewandten Abdeckkörper 54 ist vorzugsweise ein Lager 66 angeordnet, um die Reibung zwischen dem Halteelement 64 und dem Abdeckkörper 54 zu verringern. Das Lager 66 ist vorliegend ausgestaltet als Lagerring, insbesondere Kugellager, am unteren der Abdeckkörper 54. Als "unten" wird vorliegend derjenige Abdeckkörper 54 bei einem bestimmungsgemäßen Einsatz der Waschvorrichtung 18 angesehen, der einer Aufstellfläche 70 für das Fahrzeug 32 zugewandt ist. Das Gewicht des Waschvorrichtungssegmentes 26 kann dadurch auf den Lagerring 68 eingeleitet werden.

Die Abdeckkörper 54 bilden jeweils einen Kopplungskörper 72 der Getriebeeinrichtung 44. Über den Kopplungskörper 72 wird mindestens ein Eingriffselement 74 zum Abstützen des Drehkörpers 50 an die Welle 22 gekoppelt.

Vorliegend sind zwei Eingriffselemente 74 vorgesehen, ausgestaltet als Zahnräder 76. Die Zahnräder 76 stehen mit dem Hohlrad 52 in Eingriff. Bei einer Rotation der Welle 22 rotieren die Zahnräder 76 ebenso wie das Zahnrad 48 und kämmen mit dem Hohlrad 52. Jedes Zahnrad 76 ist über eine Welle 78 drehbar an beiden Abdeckkörpern 54 gelagert, wobei von den Wellen 78 definierte Drehachsen 80 parallel zur Drehachse 24 und zur Waschvorrichtungssegmentachse 40 ausgerichtet sind. Über die Zahnräder 76 kann sichergestellt werden, dass die Rotationsebene des Hohlrades 52 senkrecht zur Drehachse 24 erhalten bleibt.

Das Waschvorrichtungssegment 26 umfasst ferner eine Anschlageinrichtung 82, um die Verschwenkung des Waschelementhaltekörpers 28 relativ zur Welle 22 zu begrenzen. Die Anschlageinrichtung 82 umfasst ein Blockierelement 84. Das Blockierelement 84 ist ausgestaltet als Rohr oder Stab 86 und parallel zur Drehachse 24 ausgerichtet.

Der Stab 86 ist ortsfest bezüglich der Welle 22 angeordnet, jedoch wie nachfolgend erläutert feststellbar verstellbar zu dieser. Der Stab 86 durchgreift eine Durchgangsöffnung 88 der Abdeckkörper 54 und durchgreift den vom Hohlrad 52 eingefassten Raum der Getriebeeinrichtung 44.

Vorliegend ist der Stab 86 allen Waschvorrichtungssegmenten 26 zugeordnet, so dass sich der Stab 86 vorzugsweise über die gesamte oder im Wesentlichen gesamte Länge der Welle 22 erstreckt.

Für den Stab 86 ist eine Verstelleinrichtung 90 vorgesehen. Die Verstelleinrichtung 90 kann zum Beispiel in die Antriebseinrichtung 20 integriert oder an dieser angeordnet sein. Über die Verstelleinrichtung 90 ist die Möglichkeit gegeben, die Position des Stabes 86 relativ zur Welle 22 dadurch zu ändern, dass dieser um die Drehachse 24 verschwenkt wird. Vorliegend ist insbesondere die Möglichkeit gegeben, den Stab 86 um einen Schwenkwinkel von 180° oder im Wesentlichen 180° um die Welle 22 zu verschwenken. Mit der Verstelleinrichtung 90 kann der Stab 86 nach dem Verschwenken festgelegt werden, so dass er ortsfest bezüglich der Welle 22 angeordnet ist. Nur die Figuren 3 sowie 5 bis 8 zeigen den Stab 86, jeweils in derselben ortsfesten Stellung bezüglich der Welle 22.

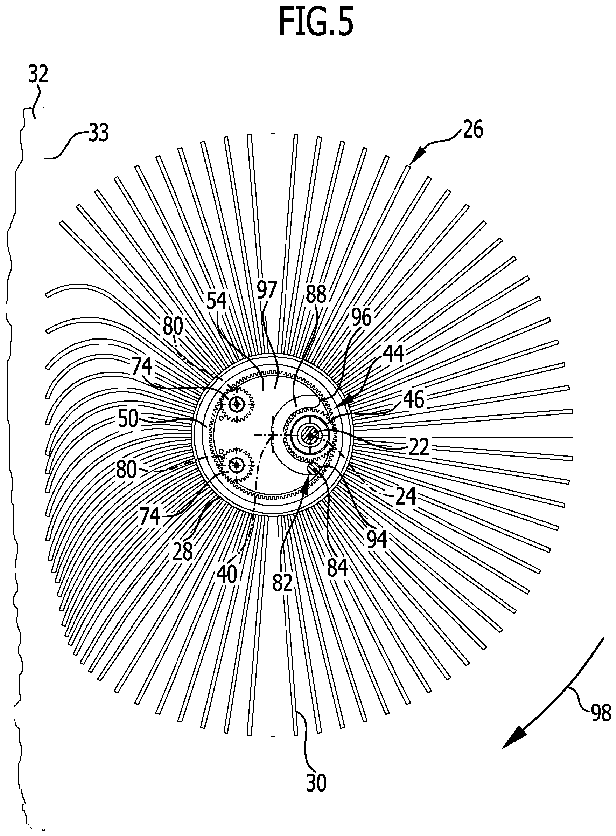

Die Durchgangsöffnung 88 bildet ein Führungselement 92 für den Stab 86, wenn dieser um die Welle 22 verschwenkt und wenn die Abdeckkörper 54 um die Welle 22 verschwenken. Die Durchgangsöffnungen 88 sind gebildet als bogenförmige Durchbrechungen der Abdeckkörper 54, deren Enden jeweilige Anschlagelemente 94 bzw. 96 für den Stab ausbilden. Die Anschlagelemente 94, 96 sind Bestandteil der Anschlageinrichtung 82. Die Figuren 3 und 5 zeigen den Stab 86 beim Zusammenwirken mit dem Anschlagelement 94.

Die Abdeckkörper 54 bilden durch die Anschlagelemente 94, 96 jeweils einen Anschlagkörper 97 der Anschlageinrichtung 82.

Bezugnehmend insbesondere auf die Figuren 5 bis 8 wird nachfolgend die Funktionsweise der erfindungsgemäßen Waschvorrichtung 18 anhand eines Waschvorrichtungssegmentes 26 erläutert. Die Figuren 5 bis 8 zeigen das Waschvorrichtungssegment 26 in axialer Blickrichtung, wobei ein Abdeckkörper 54 ausgeblendet ist, um die Sicht auf das Innere der Getriebeeinrichtung 44 freizugeben.

Wie bereits erwähnt wird angenommen, dass die Welle 22 und der Stab 86 ortsfest zueinander sind. Das Fahrzeug 32 wird über dessen Kontur 33 in unterschiedlichem Abstand zur Welle 22 angedeutet. Dieser unterschiedliche Abstand kommt zum Beispiel dadurch zustande, dass die Waschvorrichtung 18 in Richtung auf das Fahrzeug 32 bewegt wird. Umgekehrt könnte angenommen werden, dass die Kontur 33 des Fahrzeugs 32 zunehmend in Richtung der Welle 22 hervorragt. Der Abstand des Fahrzeugs 32 von der Welle 22 nimmt in den Figuren 5, 6, 7 und 8 kontinuierlich ab.

In den Figuren 5 bis 8 ist die Welle 22 rechtsdrehend dargestellt, dies könnte jedoch auch umgekehrt sein. Infolge der rechtsdrehenden Welle 22 um die Drehachse 24 wird das Hohlrad 52 und damit der Waschelementhaltekörper 28 rechtsdrehend in Rotation um die Waschvorrichtungssegmentachse 40 versetzt. Entsprechendes gilt für die Waschelemente 30. Die Drehrichtung wird durch die Pfeilrichtung 98 symbolisiert.

Der Stab 86 ist über die Verstelleinrichtung 90 so bezüglich dem Anschlagkörper 97 eingestellt, dass der Stab 86 mit dem Anschlagelement 94 zusammenwirkt. Aufgrund angetriebener Welle 22 rotiert der Waschelementhaltekörper 28. Über den Reibschluss neigen auch die Abdeckkörper 54 zur Rotation um die Waschvorrichtungssegmentachse 40. Allerdings wird eine Drehung der Abdeckkörper 54 infolge des Zusammenwirkens des Stabes 86 mit dem Anschlagelement 94 verhindert. Unter der Rotation des Waschelementhaltekörpers 28 kann das Fahrzeug 32 mit den Waschelementen 30 gereinigt werden, wobei die Orientierung der Getriebeeinrichtung 44 zum Fahrzeug 32 infolge der Anschlageinrichtung 82 beibehalten wird.

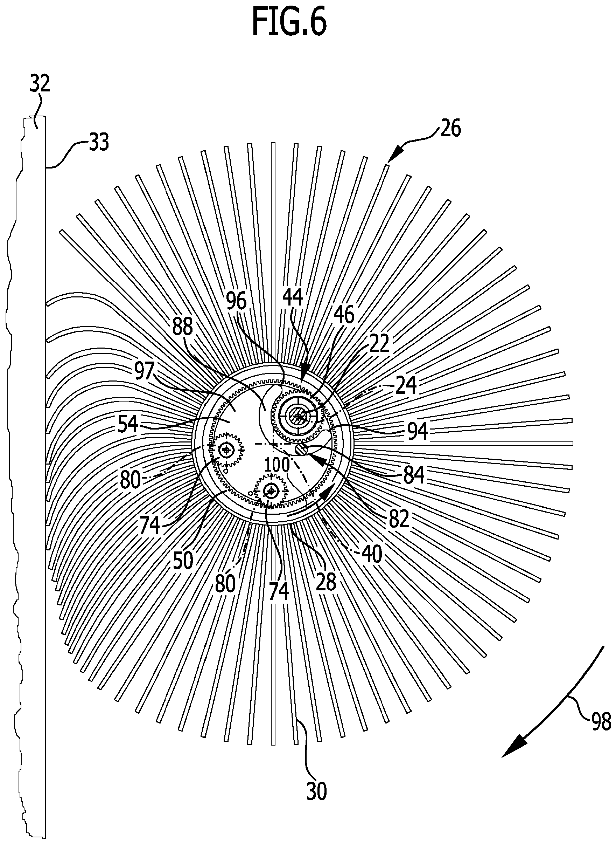

Figur 6 zeigt die Situation, bei der der Abstand zwischen der Welle 22 und dem Fahrzeug 32 gegenüber der in Figur 5 dargestellten Situation verringert ist. Dies führt zu einer erhöhten Reibung der Waschelemente 30 am Fahrzeug 32. Infolgedessen erfahren der Waschelementhaltekörper 28 und das Hohlrad 52 ein Drehmoment. Dies führt dazu, dass der Waschelementhaltekörper 28 und das Hohlrad 52 um die Drehachse 24 relativ zur Welle 22 verschwenken, symbolisiert durch einen Pfeil 100. Die Schwenkrichtung 100 ist der Drehrichtung 98 des Hohlrades 52 und des Waschelementhaltekörpers 28 entgegengesetzt. Die Rotation derselben um die Waschvorrichtungssegmentachse 40 in Pfeilrichtung 98 wird aufrechterhalten.

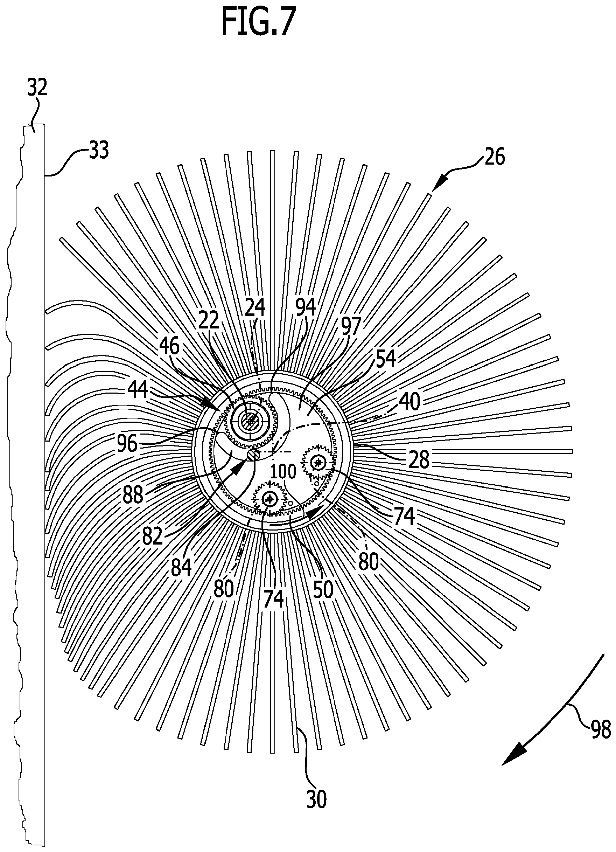

Bei der in Figur 7 dargestellten Situation ist der Abstand des Fahrzeugs 32 von der Welle 22 weiter verringert. Der Waschelementhaltekörper 28 und das Hohlrad 52 rotieren weiter in Pfeilrichtung 98, angetrieben durch die Welle 22. Infolge der Reibung der Waschelemente 30 wird der Waschelementhaltekörper 28 zusammen mit dem Hohlrad 52 weiter in Pfeilrichtung 100 um die Drehachse 54 relativ zur Welle 22 verschwenkt.

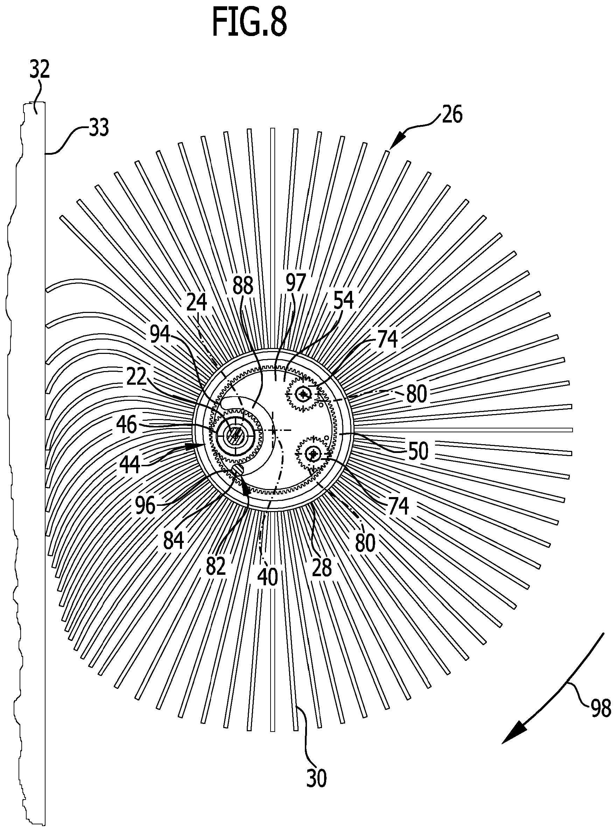

Entsprechendes gilt für die in Figur 8 dargestellte Situation, in der der Abstand des Fahrzeugs 32 von der Welle 22 noch weiter verringert ist. Der Waschelementhaltekörper 28 und das Hohlrad 52 werden über die Welle 22 in Pfeilrichtung 98 drehend angetrieben. Die Reibung der Waschelemente 30 führt zu einer weiteren Verschwenkung des Waschelementhaltekörpers 28 und des Hohlrades 52 relativ zur Welle 22 um die Drehachse 24.

Bei der in Figur 8 dargestellten Situation ist der Waschelementhaltekörper 28 soweit wie möglich relativ zur Welle 22 verschwenkt. Der Schwenkwinkel wird durch den Stab 86 und das mit diesem zusammenwirkende Anschlagelement 96 begrenzt.

Die vorliegende Beschreibung zeigt, dass das Waschvorrichtungssegment 26 abhängig von der relativen Lage des Fahrzeugs 32 und dessen Kontur 33 relativ zur Welle 22 verschwenkt wird. Anders formuliert kann dadurch eine Anpassung der Lage des Waschvorrichtungssegmentes 26 an die Kontur 33 erfolgen. Weil die Waschvorrichtung 18 eine Mehrzahl von unabhängig voneinander antreibbaren und verschwenkbaren Waschvorrichtungssegmenten 26 aufweist, erlaubt die Waschvorrichtung 18 eine besonders zuverlässige und vielseitige Anpassung an die Kontur 33 des Fahrzeugs 32.

Vergrößert sich der Abstand zwischen dem Fahrzeug 32 und der Welle 22 bei den in den Figuren 6, 7 und 8 dargestellten Situationen wieder, geschieht Folgendes:
Durch die Verringerung des Drehmomentes aufgrund geringerer Reibung der Waschelemente 30 am Fahrzeug 32 kann das Hohlrad 52 erneut eine überlagerte Bewegung ausführen, bei der eine Rotation um die Waschvorrichtungssegmentachse 40 in Pfeilrichtung 98 und eine Verschwenkung um die Drehachse 24 relativ zur Welle ausgeführt wird. Der Waschelementhaltekörper 28 verschwenkt zusammen mit dem Hohlrad 52 entgegen der Pfeilrichtung 100, d.h. in der Pfeilrichtung 98.

Die reibschlüssige Kopplung des Hohlrades 52 mit den Abdeckkörpern 54 führt dazu, dass diese ebenfalls in Rotation um die Waschvorrichtungssegmentachse 40 in Pfeilrichtung 98 versetzt werden. Die Rotation erfolgt solange, bis der Stab 86 zum Begrenzen des Schwenkwinkels erneut mit dem Anschlagelement 94 zusammenwirkt, entsprechend der in Figur 5 dargestellten Situation.

Ist die Drehrichtung der Waschvorrichtung 18 umzukehren, d. h. beim vorliegenden Ausführungsbeispiel linksdrehend statt rechtsdrehend, kann über die Verstelleinrichtung 90 zunächst der Stab 86 im Führungselement 92 um die Welle 22 verschwenkt werden. Beispielsweise wird der Stab 86 soweit verschwenkt, bis er das Anschlagelement 96 kontaktiert. Bei linksdrehendem Antrieb der Waschvorrichtung 18 rotieren die Waschelemente 30 entgegen der Pfeilrichtung 98. Über die Reibung der Waschelemente 30 kann das Waschvorrichtungssegment 26 entgegen der Pfeilrichtung 100 um die Drehachse 24 gedreht werden.

Ein Vorteil der Waschvorrichtung 18 besteht insbesondere auch darin, dass nach einem Verschwenken eines Waschvorrichtungssegmentes 26 keine Rückstelleinrichtung erforderlich ist.

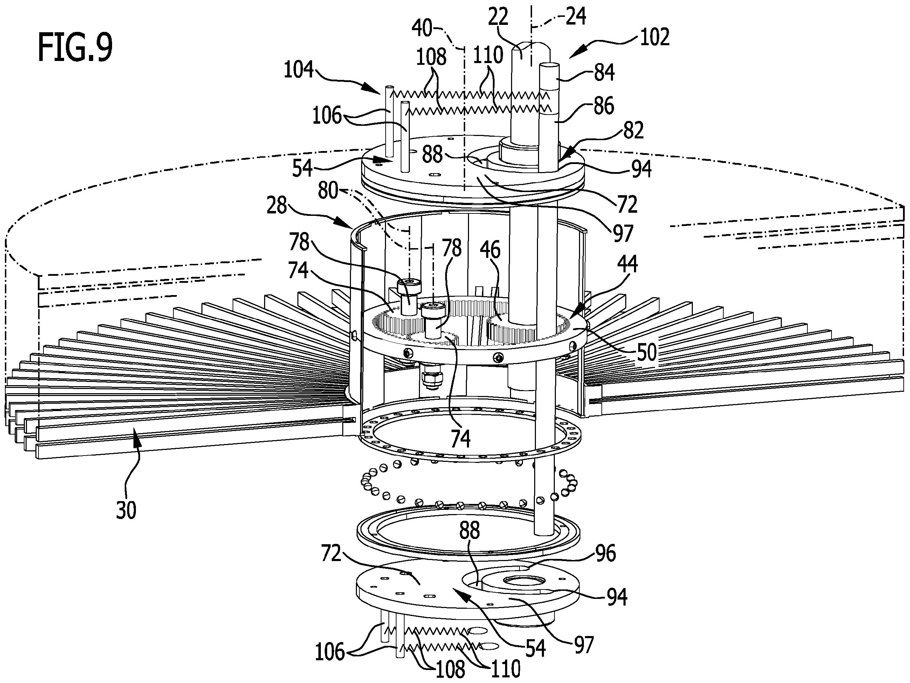

Bei einer in Figur 9 teilweise dargestellten vorteilhaften weiteren Ausführungsform ist indessen eine Rückstelleinrichtung vorgesehen. Figur 9 zeigt ein mit dem Bezugszeichen 102 belegtes Waschvorrichtungssegment einer nicht in seiner Gesamtheit dargestellten vorteilhaften Ausführungsform einer erfindungsgemäßen Waschvorrichtung. Das Waschvorrichtungssegment 102 könnte auch anstelle eines Waschvorrichtungssegmentes 26 bei einer Variante der Waschvorrichtung 18 zum Einsatz kommen.

Gleiche oder gleichwirkende Merkmale und Bauteile der Waschvorrichtungssegmente 26 und 102 sind mit identischen Bezugszeichen belegt. Die vorstehend erläuterten Vorteile können auch unter Einsatz des Waschvorrichtungssegmentes 102 erzielt werden. Nachfolgend wird nur auf die wesentlichen Unterschiede eingegangen.

Beim Waschvorrichtungssegment 102 dient eine Rückstelleinrichtung 104 dazu, die Abdeckkörper 54 relativ zum Stab 86 vorzuspannen. Zu diesem Zweck ist/sind an jedem Abdeckkörper 54 mindestens ein und vorzugsweise zwei Halteelemente 106 vorgesehen. An einem jeweiligen Halteelement 106 greift ein elastisches Element 108 an, das vorliegend ausgestaltet ist als Schraubenfeder 110. Die Schraubenfeder 110 greift am Stab 86 an, relativ zu dem sie drehbeweglich ausgestaltet ist.

Die Schraubenfeder 110 ist vorliegend auf Zug ausgebildet. Eine Verschwenkung des Waschvorrichtungssegmentes 102 relativ zur Welle 22 erfolgt gegen die Rückstellwirkung der Schraubenfeder 110. Das Vorsehen von zwei Schraubenfedern 110 ermöglicht das Rückverschwenken des Waschvorrichtungssegmentes 102 bei beiden unterschiedlichen Drehrichtungen (rechtsdrehend und linksdrehend).

## Patentansprüche

1. Waschvorrichtung für eine Fahrzeugwaschanlage, welche Waschvorrichtung (18) eine um eine Drehachse (24) drehend antreibbare Welle (22) und mit dieser in Wirkverbindung stehende Waschelemente (30) zum Reinigen eines Fahrzeugs (32) umfasst, wobei die Waschvorrichtung (18) axial in zwei oder mehr Waschvorrichtungssegmente (26) unterteilt ist und mindestens ein Waschvorrichtungssegment (26) einen Waschelementhaltekörper (28) mit daran gehaltenen Waschelementen (30) aufweist, der eine von der Drehachse (24) unterschiedliche Waschvorrichtungssegmentachse (40) definiert, sowie eine Getriebeeinrichtung (44), die die Welle (22) mit dem Waschelementhaltekörper (28) koppelt, um diesen um die Waschvorrichtungssegmentachse (40) zu rotieren, wobei der Waschelementhaltekörper (28) über die Getriebeeinrichtung (44) relativ zur Welle (22) um die Drehachse (24) verschwenkbar ausgebildet ist, wobei die Getriebeeinrichtung (44) ein drehfest mit der Welle (22) verbundenes Antriebselement (46) aufweist und einen Drehkörper (50), an dem der Waschelementhaltekörper (28) drehfest gehalten ist oder der den Waschelementhaltekörper (28) ausbildet, wobei der Drehkörper (50) mit dem Antriebselement (46) in Eingriff steht, wobei der Drehkörper (50) ein Hohlrad ist und das Antriebselement eine innenseitig am Hohlrad abrollende Rolle, oder wobei der Drehkörper (50) ein Hohlrad (52) mit Innenverzahnung ist und das Antriebselement (46) ein mit dem Hohlrad (52) kämmendes Zahnrad (48), wobei die Getriebeeinrichtung (44) mindestens ein als Zahnrad (76) oder Rolle ausgestaltetes Eingriffselement (74) umfasst, das am Hohlrad (52) abrollt, **dadurch gekennzeichnet, dass** die Getriebeeinrichtung (44) zwei Kopplungskörper (72) umfasst, an denen mindestens ein Eingriffselement (74) drehbar gelagert ist, die jeweils an der Welle (22) drehbeweglich gelagert sind und die axial auf einander abgewandten Seiten des Drehkörpers (50) und des mindestens einen Eingriffselementes (74) angeordnet sind.

2. Waschvorrichtung nach Anspruch 1, **dadurch gekennzeichnet, dass** die Getriebeeinrichtung (44) zumindest einen den Drehkörper (50) und das Antriebselement (46) quer zur Waschvorrichtungssegmentachse (40) zumindest teilweise überdeckenden Abdeckkörper (54) umfasst.

3. Waschvorrichtung nach Anspruch 2, **dadurch gekennzeichnet, dass** zumindest eines der Folgenden gilt:
- die Getriebeeinrichtung (44) umfasst zwei Abdeckkörper (54), die axial auf einander abgewandten Seiten des Drehkörpers (50) und des Antriebselementes (46) angeordnet sind;
- der mindestens eine Abdeckkörper (54) ist plattenförmig oder im Wesentlichen plattenförmig;
- der mindestens eine Abdeckkörper (54) ist drehbeweglich zur Welle (22) ausgebildet, insbesondere weist die Getriebeeinrichtung (44) ein Lager (60) auf, über das der mindestens eine Abdeckkörper (54) drehbar an der Welle (22) gelagert ist;
- der mindestens eine Abdeckkörper (54) ist reibschlüssig mit dem Drehkörper (50) gekoppelt zur Rotation um die Waschvorrichtungssegmentachse (40), wobei der mindestens eine Abdeckkörper (54) vorzugsweise drehbeweglich relativ zum Drehkörper (50) ausgebildet ist und die Getriebeeinrichtung (44) insbesondere ein Lager (56) aufweist, über das der mindestens eine Abdeckkörper (54) drehbar am Drehkörper (50) gelagert ist.

4. Waschvorrichtung nach einem der voranstehenden Ansprüche, **dadurch gekennzeichnet, dass** zwei Eingriffselemente (74) vorgesehen sind, die jeweils an mindestens einem Kopplungskörper (72) drehbar gelagert sind und/oder dass der mindestens eine Abdeckkörper (54) der Getriebeeinrichtung (44) einen Kopplungskörper (72) umfasst oder ausbildet.

5. Waschvorrichtung nach einem der voranstehenden Ansprüche, **dadurch gekennzeichnet, dass** das Waschvorrichtungssegment (26) eine Anschlageinrichtung (82) aufweist zum Begrenzen eines Schwenkwinkels des Waschelementhaltekörpers (28) relativ zur Welle (22) in zumindest einer Schwenkrichtung, vorzugsweise dass die Anschlageinrichtung (82) mindestens ein Anschlagelement (94, 96) umfasst, das relativ zum Drehkörper (50) drehbeweglich ausgestaltet ist und durch Reibschluss mit dem Drehkörper (50) gekoppelt ist, sowie mindestens ein mit dem mindestens einen Anschlagelement (94, 96) zusammenwirkendes Blockierelement (84), das ortsfest relativ zur Welle (22) angeordnet ist.

6. Waschvorrichtung nach Anspruch 5, **dadurch gekennzeichnet, dass** zumindest eines der Folgenden gilt:
- die Anschlageinrichtung (82) umfasst zwei Anschlagelemente (94, 96), wobei mit einem jeweiligen Anschlagelement (94, 96) ein Verschwenken des Waschelementhaltekörpers (28) in eine jeweilige Schwenkrichtung begrenzbar ist;
- dasselbe Blockierelement (84) wirkt, abhängig von der Schwenkrichtung, mit einem jeweiligen der beiden Anschlagelemente (94, 96) zusammen zum Begrenzen des Schwenkwinkels;
- die Anschlageinrichtung (82) weist einen Anschlagkörper (97) auf, der beide Anschlagelemente (94, 96) umfasst, wobei bevorzugt zwei Anschlagkörper (97) vorgesehen sind, die axial auf einander abgewandten Seiten des Drehkörpers (50) und des Antriebselementes (46) angeordnet sind, und/oder wobei der Anschlagkörper (97) bevorzugt ein Führungselement (92) umfasst oder bildet, durch das das mindestens eine Blockierelement (84) beim Verschwenken des Waschelementhaltekörpers (28) geführt ist.

7. Waschvorrichtung nach Anspruch 5 oder 6, **dadurch gekennzeichnet, dass** zumindest eines der Folgenden gilt:
- ein gemeinsames Blockierelement (84) ist vorgesehen, das mit dem jeweiligen mindestens einen Anschlagelement (94, 96) von zwei oder mehr Waschvorrichtungssegmenten (26) zusammenwirkt;
- das mindestens eine Blockierelement (84) ist mittels einer Verstelleinrichtung (90) relativ zum mindestens einen Anschlagelement (94, 96) verstellbar;
- das mindestens eine Blockierelement (84) ist längserstreckt und parallel zur Welle (22) ausgerichtet;
- das mindestens eine Anschlagelement (94, 96), insbesondere der Anschlagkörper (97), ist über ein Lager (56) drehbar am Drehkörper (68) gelagert.

8. Waschvorrichtung nach Anspruch 6 oder 7, **dadurch gekennzeichnet, dass** der mindestens eine Abdeckkörper (54) der Getriebeeinrichtung (44) den mindestens einen Anschlagkörper (97) umfasst oder ausbildet.

9. Waschvorrichtung nach einem der voranstehenden Ansprüche, **dadurch gekennzeichnet, dass** der Waschelementhaltekörper (28) entgegen der Wirkung mindestens eines elastischen Elementes (108) relativ zur Welle (22) verschwenkbar ist, vorzugsweise dass das mindestens eine elastische Element (108) ein Federelement (110) ist, das das mindestens eine Anschlagelement (94, 96), insbesondere den Anschlagkörper (97), relativ zum mindestens einen Blockierelement (84) vorspannt.

10. Waschvorrichtung nach einem der voranstehenden Ansprüche, **dadurch gekennzeichnet, dass** zumindest eines der Folgenden gilt:
- der Waschelementhaltekörper (28) umgibt die Getriebeeinrichtung (44) in Umfangsrichtung der Waschvorrichtungssegmentachse (40);
- die Welle (22) ist starr und geradlinig erstreckt ausgebildet;
- die Waschelemente (30) sind Waschborsten oder Waschlappen;
- die Waschvorrichtung (18) ist eine Seitenwaschvorrichtung oder eine Dachwaschvorrichtung.

11. Waschvorrichtung nach einem der voranstehenden Ansprüche, **dadurch gekennzeichnet, dass** jedes Waschvorrichtungssegment (18) einen Waschelementhaltekörper (28) und eine Getriebeeinrichtung (44) gemäß einem der voranstehenden Ansprüche umfasst.

12. Waschvorrichtung nach Anspruch 11, **dadurch gekennzeichnet, dass** zumindest eines der Folgenden gilt:
- die Waschelementhaltekörper (28) sind der Waschvorrichtungssegmente (26; 102) unabhängig voneinander antreibbar und relativ zur Welle (22) verschwenkbar;
- die Waschvorrichtungssegmente (26; 102) sind identisch ausgestaltet;
- die Waschvorrichtung (18) weist mindestens drei Waschvorrichtungssegmente (26; 102) auf, vorzugsweise vier oder mehr Waschvorrichtungssegmente (26; 102).

13. Fahrzeugwaschanlage, umfassend zumindest eine Waschvorrichtung (18) nach einem der voranstehenden Ansprüche.

## Claims

1. Wash apparatus for a vehicle wash installation, which wash apparatus (18) comprises a shaft (22) drivable in rotation about a rotation axis (24) and wash elements (30) operatively connected thereto, for cleaning a vehicle (32), wherein the wash apparatus (18) is divided axially in two or more wash apparatus segments (26) and at least one wash apparatus segment (26) comprises a wash element holding body (28) having wash elements (30) held thereto, said wash element holding body (28) defining a wash apparatus segment axis (40) which is different from the rotation axis (24), and a gear device (44) which couples the shaft (22) to the wash element holding body (28) in order to rotate same about the wash apparatus segment axis (40), wherein the wash element holding body (28) is configured for pivotal movement relative to the shaft (22) about the rotation axis (24) via the gear device (44), wherein the gear device (44) comprises a drive element (46) that is connected to the shaft (22) in rotationally fixed relation therewith and a rotary body (50) to which the wash element holding body (28) is held in rotationally fixed relation or which forms the wash element holding body (28), wherein the rotary body (50) is in engagement with the drive element (46), wherein the rotary body (50) is a ring gear and the drive element is a roller that rolls on the inside of the ring gear, or wherein the rotary body (50) is an internally toothed ring gear (52) and the drive element (46) is a toothed wheel (48) meshing with the ring gear (52), wherein the gear device (44) comprises at least one engagement element (74) configured as a toothed wheel (76) or roller which rolls on the ring gear (52), **characterized in that** the gear device (44) comprises two coupling bodies (72) on which is rotatably supported at least one engagement element (74) and which are respectively supported for rotary movement on the shaft (22), the two coupling bodies (72) being axially arranged on sides of the rotary body (50) and the at least one engagement element (74) facing away from each other.

2. Wash apparatus in accordance with claim 1, **characterized in that** the gear device (44) comprises at least one cover body (54) which at least partially covers the rotary body (50) and the drive element (46) in a direction transverse to the wash apparatus segment axis (40).

3. Wash apparatus in accordance with claim 2, **characterized in that** at least one of the following applies:
- the gear device (44) comprises two cover bodies (54) which are arranged axially on sides of the rotary body (50) and the drive element (46) facing away from each other;
- the at least one cover body (54) is plate-shaped or substantially plate-shaped;
- the at least one cover body (54) is configured for rotary movement relative to the shaft (22), in particular the gear device (44) comprises a bearing (60) via which the at least one cover body (54) is rotatably supported on the shaft (22);
- the at least one cover body (54) is coupled to the rotary body (50) in friction-locking relation therewith for rotation about the wash apparatus segment axis (40), wherein the at least one cover body (54) is preferably configured for rotary movement relative to the rotary body (50), and the gear device (44) in particular comprises a bearing (56) via which the at least one cover body (54) is rotatably supported on the rotary body (50).

4. Wash apparatus in accordance with any one of the preceding claims, **characterized in that** two engagement elements (74) are provided, each of which is rotatably supported on at least one coupling body (72) and/or in that the at least one cover body (54) of the gear device (44) comprises or forms the coupling body (72).

5. Wash apparatus in accordance with any one of the preceding claims, **characterized in that** the wash apparatus segment (26) comprises a stop device (82) for limiting a pivot angle of the wash element holding body (28) relative to the shaft (22) in at least one pivoting direction, preferably **in that** the stop device (82) comprises at least one stop element (94, 96) which is configured for rotary movement relative to the rotary body (50) and is coupled to the rotary body (50) by friction-locking engagement, and at least one blocking element (84) cooperating with the at least one stop element (94, 96), said blocking element (84) being arranged stationary relative to the shaft (22).

6. Wash apparatus in accordance with claim 5, **characterized in that** at least one of the following applies:
- the stop device (82) comprises two stop elements (94, 96), wherein pivoting of the wash element holding body (28) in a respective pivoting direction is limitable by a respective stop element (94, 96);
- depending on the pivoting direction, the same blocking element (84) cooperates with a respective one of the two stop elements (94, 96), for limiting the pivot angle;
- the stop device (82) comprises a stop body (97) which comprises both of the stop elements (94, 96), preferably wherein two stop bodies (97) are provided which are arranged on sides of the rotary body (50) and the drive element (46) facing away from each other, and/or wherein the stop body (97) preferably comprises or forms a guide element (92) through which the at least one blocking element (84) is guided when pivoting the wash element holding body (28).

7. Wash apparatus in accordance with claim 5 or 6, **characterized in that** at least one of the following applies:
- a common blocking element (84) is provided that cooperates with the respective at least one stop element (94, 96) of two or more wash apparatus segments (26);
- the at least one blocking element (84) is adjustable relative to the at least one stop element (94, 96) by way of an adjustment device (90);
- the at least one blocking element (84) is elongated and is oriented parallel to the shaft (22);
- the at least one stop element (94, 96), in particular the stop body (97), is rotatably supported on the rotary body (68) via a bearing (56).

8. Wash apparatus in accordance with claim 6 or 7, **characterized in that** the at least one cover body (54) of the gear device (44) comprises or forms the at least one stop body (97).

9. Wash apparatus in accordance with any one of the preceding claims, **characterized in that** the wash element holding body (28) is pivotable relative to the shaft (22) against the action of at least one elastic element (108), preferably **in that** the at least one elastic element (108) is a spring element (110) which biases the at least one stop element (94, 96), in particular the stop body (97), relative to the at least one blocking element (84).

10. Wash apparatus in accordance with any one of the preceding claims, **characterized in that** at least one of the following applies:
- the wash element holding body (28) surrounds the gear device (44) in a circumferential direction of the wash apparatus segment axis (40);
- the shaft (22) is of rigid configuration and straight-line extension;
- the wash elements (30) are wash bristles or wash cloths;
- the wash apparatus (18) is a side wash apparatus or a roof wash apparatus.

11. Wash apparatus in accordance with any one of the preceding claims, **characterized in that** each wash apparatus segment (26) comprises a wash element holding body (28) and a gear device (44) in accordance with any one of the preceding claims.

12. Wash apparatus in accordance with claim 11, **characterized in that** at least one of the following applies:
- the wash element holding bodies (28) of the wash apparatus segments (26; 102) are drivable and pivotable relative to the shaft (22) independently of each other;
- the wash apparatus segments (26; 102) are of identical configuration;
- the wash apparatus (18) comprises at least three wash apparatus segments (26; 102), preferably four or more wash apparatus segments (26; 102).

13. Vehicle wash installation, comprising at least one wash apparatus (18) in accordance with any one of the preceding claims.

## Revendications

1. Dispositif de lavage pour une installation de lavage de véhicules, ledit dispositif de lavage (18) comprenant un arbre (22) pouvant être entraîné en rotation autour d'un axe de rotation (24), ainsi que des éléments de lavage (30) en liaison d'interaction avec cet arbre, pour laver un véhicule (32), le dispositif de lavage (18) étant subdivisé axialement en deux segments de dispositif de lavage (26) ou davantage et dans lequel au moins un segment de dispositif de lavage (26) comprend un corps de support d'éléments de lavage (28) sur lequel sont tenus des éléments de lavage (30) et qui définit un axe de segment de dispositif de lavage (40) différent dudit axe de rotation (24), ainsi qu'un système de transmission (44), qui assure un couplage de l'arbre (22) avec le corps de support d'éléments de lavage (28), en vue de faire tourner celui-ci autour de l'axe de segment de dispositif de lavage (40), dans lequel le corps de support d'éléments de lavage (28) est réalisé pivotant par rapport à l'arbre (22), autour de l'axe de rotation (24) par l'intermédiaire du système de transmission (44), dans lequel le système de transmission (44) comprend un élément d'entrainement (46) lié de manière fixe en rotation à l'arbre (22), et un corps rotatif (50) sur lequel est maintenu de manière fixe en rotation, le corps de support d'éléments de lavage (28), ou bien qui forme le corps de support d'éléments de lavage (28), le corps rotatif (50) étant en prise avec l'élément d'entrainement (46), le corps rotatif (50) étant une couronne et l'élément d'entrainement étant un galet roulant sur le côté intérieur de la couronne, ou bien le corps rotatif (50) étant une couronne (52) à denture intérieure et l'élément d'entrainement (46) étant une roue dentée (48) engrenant avec la couronne (52), le système de transmission (44) comprenant un élément de venue en prise (74) configuré en tant que roue dentée (76) ou de galet, qui roule sur la couronne (52), **caractérisé en ce que** le système de transmission (44) comprend deux corps de couplage (72), sur lesquels est monté rotatif au moins un élément de venue en prise (74), qui sont respectivement monté mobile en rotation sur l'arbre (22) et qui sont agencés axialement sur deux côtés mutuellement opposés du corps rotatif (50) et dudit au moins un élément de venue en prise(74).

2. Dispositif de lavage selon la revendication 1, **caractérisé en ce que** le système de transmission (44) comprend au moins un corps de recouvrement (54), qui recouvre au moins partiellement le corps rotatif (50) et l'élément d'entrainement (46), transversalement à l'axe de segment de dispositif de lavage (40).

3. Dispositif de lavage selon la revendication 2, **caractérisé en ce que** l'une au moins des propriétés suivantes est vérifiée :
- le système de transmission (44) comprend deux corps de recouvrement (54), qui sont agencés, axialement, sur des côtés mutuellement opposés du corps de rotation (50) et de l'élément d'entrainement (46) ;
- ledit au moins un corps de recouvrement (54) est réalisé sous forme de plaque ou sensiblement sous forme de plaque ;
- ledit au moins un corps de recouvrement (54) est réalisé mobile en rotation par rapport à l'arbre (22), le système de transmission (44) présentant notamment un palier (60) par l'intermédiaire duquel ledit au moins un corps de recouvrement (54) est monté rotatif sur l'arbre (22) ;
- ledit au moins un corps de recouvrement (54) est couplé par adhérence au corps rotatif (50) pour la rotation autour de l'axe de segment de dispositif de lavage (40), ledit au moins un corps de recouvrement (54) étant de préférence réalisé mobile en rotation par rapport au corps rotatif (50), et le système de transmission (44) présentant notamment un palier (56) par l'intermédiaire duquel ledit au moins un corps de recouvrement (54) est monté rotatif sur le corps rotatif (50).

4. Dispositif de lavage selon l'une des revendications précédentes, **caractérisé en ce que** deux éléments de venue en prise (74) sont prévus, montés respectivement rotatifs sur au moins un corps de couplage (72) et/ou **en ce que** ledit au moins un corps de recouvrement (54) du système de transmission (44) comprend ledit au moins un corps de couplage (72) ou forme celui-ci.

5. Dispositif de lavage selon l'une des revendications précédentes, **caractérisé en ce que** le segment de dispositif de lavage (26) comporte un dispositif de butée (82) pour limiter un angle de pivotement du corps de support d'éléments de lavage (28) par rapport à l'arbre (22), dans au moins une direction de pivotement, de préférence **en ce que** le dispositif de butée (82) comprend au moins un élément de butée (94, 96), qui est de configuration mobile en rotation par rapport au corps rotatif (50), et est couplé au corps rotatif (50) par adhérence, ainsi qu'au moins un élément de blocage (84), qui interagit avec ledit au moins un élément de butée (94, 96), et qui est agencé en position fixe par rapport à l'arbre (22).

6. Dispositif de lavage selon la revendication 5, **caractérisé en ce que** l'une au moins des propriétés suivantes est vérifiée :
- le dispositif de butée (82) comprend deux éléments de butée (94, 96), un élément de butée (94, 96) respectif limitant un pivotement du corps de support d'éléments de lavage (28) dans une direction de pivotement respectivement correspondante ;
- le même élément de blocage (84) interagit, en fonction de la direction de pivotement, avec l'un respectif des deux éléments de butée (94, 96), pour limiter l'angle de pivotement ;
- le dispositif de butée (82) comprend un corps de butée (97), qui comporte les deux éléments de butée (94, 96), deux corps de butée (97) étant de préférence prévus et agencés axialement sur des côtés mutuellement opposés du corps rotatif (50) et de l'élément d'entrainement (46) et/ou le corps de butée (97) de préférence comporte ou forme un élément de guidage (92) par lequel est guidé ledit au moins un élément de blocage (84) lors du pivotement du corps de support d'éléments de lavage (28) .

7. Dispositif de lavage selon la revendication 5 ou la revendication 6, **caractérisé en ce que** l'une au moins des propriétés suivantes est vérifiée :
- il est prévu un élément de blocage (84) commun, qui interagit avec ledit au moins un élément de butée (94, 96) respectif de deux segments de dispositif de lavage (26) ou davantage ;
- ledit au moins un élément de blocage (84) est réglable par rapport au dit au moins un élément de butée (94, 96), au moyen d'un dispositif de réglage (90) ;
- ledit au moins un élément de blocage (84) s'étend longitudinalement et est d'orientation parallèle à l'arbre (22) ;
- ledit au moins un élément de butée (94, 96), notamment le corps de butée (97), est monté rotatif sur le corps rotatif (68) par l'intermédiaire d'un palier (56).

8. Dispositif de lavage selon la revendication 6 ou la revendication 7, **caractérisé en ce que** ledit au moins un corps de recouvrement (54) du système de transmission (44) comprend ou forme ledit au moins un corps de butée (97) .

9. Dispositif de lavage selon l'une des revendications précédentes, **caractérisé en ce que** le corps de support d'éléments de lavage (28) peut pivoter par rapport à l'arbre (22), à l'encontre de l'action d'au moins un élément élastique (108), de préférence **en ce que** ledit au moins un élément élastique (108) est un élément de ressort (110), qui assure une précontrainte dudit au moins un élément de butée (94, 96), notamment du corps de butée (97), par rapport au dit au moins un élément de blocage (84).

10. Dispositif de lavage selon l'une des revendications précédentes, **caractérisé en ce que** l'une au moins des propriétés suivantes est vérifiée :
- le corps de support d'éléments de lavage (28) entoure le système de transmission (44) dans la direction périphérique de l'axe de segment de dispositif de lavage (40);
- l'arbre (22) est rigide et s'étend de manière rectiligne ;
- les éléments de lavage (30) sont des poils de brosse de lavage ou des bandes de lavage ;
- le dispositif de lavage (18) est un dispositif de lavage latéral ou un dispositif de lavage de toit.

11. Dispositif de lavage selon l'une des revendications précédentes, **caractérisé en ce que** chaque segment de dispositif de lavage (18) comprend un corps de support d'éléments de lavage (28) et un système de transmission (44) selon l'une des revendications précédentes.

12. Dispositif de lavage selon la revendication 11, **caractérisé en ce que** l'une au moins des propriétés suivantes est vérifiée :
- les corps de support d'éléments de lavage (28) des segments de dispositif de lavage (26; 102) peuvent être entraînés indépendamment les uns des autres et peuvent pivoter par rapport à l'arbre (22) ;
- les segments de dispositif de lavage (26; 102) sont de configuration identique ;
- le dispositif de lavage (18) comporte au moins trois segments de dispositif de lavage (26; 102), de préférence quatre segments de dispositif de lavage (26; 102) ou davantage.

13. Installation de lavage de véhicules comprenant au moins un dispositif de lavage (18) selon l'une des revendications précédentes.
